# EUROPÄISCHE PATENTSCHRIFT

(11) **EP 2 855 218 B1**
(45) Veröffentlichungstag und Bekanntmachung des Hinweises auf die Patenterteilung: **30.09.2020**
(21) Anmeldenummer: 13728154.9
(22) Anmeldetag: 04.06.2013
(51) Int. Cl.: B60T 8/18, B60T 8/32, B60T 13/68, B60T 17/04, B60T 17/22

(54) **FÜLLEINRICHTUNG FÜR EINE SCHIENENFAHRZEUGNOTBREMSLEITUNG**
FILLING DEVICE FOR A RAIL VEHICLE EMERGENCY BRAKE LINE
DISPOSITIF DE REMPLISSAGE POUR UNE CONDUITE DE FREINAGE D'URGENCE DE VÉHICULE FERROVIAIRE

(30) Priorität: 04.06.2012 AT 502172012
(43) Veröffentlichungstag der Anmeldung: 08.04.2015
(73) Patentinhaber: Siemens Mobility Austria GmbH, 1210 Wien (AT)
(72) Erfinder: PIRNER, Stefan, 91224 Pommelsbrunn (DE); THÜRER, Matthias, 06130 Halle (DE)
(74) Vertreter: Deffner, Rolf
(86) Internationale Anmeldenummer: PCT/EP2013/061481
(87) Internationale Veröffentlichungsnummer: WO 2013/182558

(56) Entgegenhaltungen:
- EP-A2- 0 855 319
- US-A- 5 494 342

## Beschreibung

### Technisches Gebiet

Die Erfindung betrifft eine Fülleinrichtung für eine Schienenfahrzeugnotbremsleitung.

### Stand der Technik

Schienenfahrzeuge weisen im Allgemeinen eine pneumatisch betriebene Bremseinrichtung auf. Dabei wird pneumatische Energie (Druckluft) generiert und über die Waggons verteilt. Zur Einleitung eines Bremsvorganges wird, vom Fahrzeugführer oder der Fahrzeugsteuerung gesteuert, ein bestimmter Steuerluftdruck einem Steuerventil zugeführt, welches indirekt proportional dazu einen Bremsdruck steuert welcher den Bremszylinder zugeführt wird und solcherart eine Reibungsbremse aktiviert wird. Weiters ist häufig eine Notbremseinrichtung vorgesehen, welche bei Auftreten bestimmter Bedingungen, typischerweise dem manuellen Auslösen durch einen Fahrgast, das Zugpersonal oder dem Zugsicherungssystem eine Notbremsung einleitet. Diese Notbremsung wird durch Absenken eines Steuerdrucks an genanntem Steuerventil ausgelöst, wodurch ebenfalls die Bremszylinder mit Bremsdruck beaufschlagt werden. Während eines Notbremsvorganges soll dieser Notbremssteuerdruck keinesfalls ansteigen, da anderenfalls der Notbremsvorgang unterbrochen wird. Dazu ist das Füllventil mit einer Steuerung verbunden, welche das Füllventil während eines Notbremsvorganges geschlossen hält. Diese Ansteuerung erfüllt jedoch nicht die bei Schienenfahrzeugen oftmals geforderten Sicherheitsanforderungen. Dieses Steuersignal aus der allgemeinen Fahrzeugssteuerung erfüllt typischerweise nur den Sicherheits-Integritätslevel 0.

Dokument US5494342A offenbart eine Fülleinrichtung gemäß dem Oberbegriff des Anspruchs 1.

### Darstellung der Erfindung

Der Erfindung liegt daher die Aufgabe zugrunde, eine Fülleinrichtung für eine Schienenfahrzeugnotbremsleitung anzugeben, wobei das ungewollte Befüllen der Notbremsleitung gemäß des Sicherheits-Integritätslevels 3 verhindert wird.

Die Aufgabe wird durch eine Fülleinrichtung für eine Schienenfahrzeugnotbremsleitung gemäß des Anspruchs 1 und ein Schienenfahrzeug nach Anspruch 3 gelöst. Vorteilhafte Ausgestaltungen sind Gegenstand untergeordneter Ansprüche.

Dem Grundgedanken der Erfindung nach wird eine Fülleinrichtung für eine Schienenfahrzeugnotbremsleitung beschrieben, welche eine Hauptbehälterleitung und ein Füllventil umfasst und wobei ein Bremssteuergerät vorgesehen ist, welches mittels eines Füllsignals das Füllventil elektrisch ansteuert und wobei bei bestimmten Betriebszuständen des Bremssteuergeräts das Öffnen des Füllventils blockiert ist.

Dadurch ist der Vorteil erzielbar, das unbeabsichtigte und störende Füllen der Notbremsleitung verhindern zu können. Dieses Füllen ist insbesondere während der Durchführung einer Sicherheitsbremsung (Notbremsung) störend, da dabei gegebenenfalls die Absenkung des pneumatischen Steuerdrucks zur Einleitung einer Sicherheitsbremsung verhindert wird.

Ebenso darf auch bei einer unbeabsichtigten Trennung des Zuges (Zugabriß) keine Nachspeisung von Druckluft in diese Leitung erfolgen, sodass eine automatische Sicherheitsbremsung ausgelöst wird.

Erfindungsgemäß ist ein Füllventil vorgesehen, welches das Füllen einer Notbremsleitung steuert. Dazu ist dieses Füllventil mit einer Hauptbehälterleitung verbunden, sodass die Druckluft von der Hauptbehälterleitung in die Notbremsleitung strömen kann.

Eine Sicherheitsbremsung wird durch das Absenken des Drucks in der Notbremsleitung eingeleitet, wobei dabei keine Druckluft in die Notbremsleitung nachgespeist werden darf. Weiters ist erfindungsgemäß vorgesehen, einen Steuerausgang eines Bremssteuergeräts zur Steuerung des Füllventils einzusetzen.

Dies ist insbesondere vorteilhaft, da Bremssteuergeräte besonders abgesicherte Hard- und Software umfassen, sodass eine Fehlfunktion praktisch ausgeschlossen ist. Bremssteuergeräte regeln unter anderem die sogenannte Gleitschutzfunktion der pneumatischen Bremse mittels welcher ein Blockieren einer Achse beim Bremsen verhindert wird. Da für diese Funktion der Bremsdruck verringert werden muß, sind die steuernden Hard- und Softwarefunktionen nach höchsten Sicherheitsanforderungen auszulegen um ein übermäßiges Absenken des Bremsdrucks zu verhindern.

In weiterer nicht erfindungsgemäßen Fortbildung der Fülleinrichtung ist vorgesehen, einen nach Signalausgang des Bremssteuergeräts zur Ansteuerung des Füllventils einzusetzen, welcher gemäß eines Sicherheits-Integritätslevels > 0 ausgebildet ist, wobei besonders vorteilhaft ein Sicherheits-Integritätslevel 3 ist. Dadurch kann die größtmögliche Sicherheit vor unbeabsichtigtem Befüllen der Notbremsleitung erzielt werden.

Gemäß der Erfindung sieht vor, einen Füllvorgang einer Notbremsleitung zeitlich zu begrenzen. Dazu kann eine Zeitsteuerung des Bremssteuergeräts herangezogen werden, da diese ebenfalls gemäß höchster Sicherheitsanforderungen (Sicherheits-Integritätslevel 3) ausgebildet ist. Solcherart kann sichergestellt werden, dass eine Füllung der Notbremsleitung jedenfalls nach einer bestimmten Zeit (typischerweise 10 Sekunden) beendet wird. Ist nach dieser Zeit der vorgesehene Druck in der Notbremseinrichtung nicht erreicht, so kann von einem Fehler (Undichtigkeit) der Notbremsleitung ausgegangen werden. Die Notbremsleitung führt im Wesentlichen einen Steuerdruck, eine größere Luftmenge wird über sie nicht transportiert. Diese Maßnahme stellt weiters sicher, dass auch bei Ausfall eines Teils der steuernden Hard- bzw. Software ein Befüllen jedenfalls nach einer bestimmten Zeit beendet wird.

Gegenständliche Erfindung ermöglicht es die Sicherheit gegen unbeabsichtigtes Füllen der Notbremsleitung wesentlich zu Erhöhen, da erfindungsgemäß das diese Füllung steuernde Steuersignal aus einer wesentlich betriebssicheren Quelle gewonnen wird. Weiters stellt sich der Vorteil ein, dass dazu keine höheren Kosten anfallen, da ein im Allgemeinen vorhandenes Bremssteuergerät diese Aufgabe miterfüllt, also nur die einmaligen Kosten für die Anpassung der steuernden Software bzw. Firmware anfallen.

Die hier angeführte Erfindung verhindert ein unzweckmäßges und unbeabsichtigtes Füllen einer Notbremsleitung mit Pressluft. Eine solche Notbremsleitung ist bei Nahverkehrsbahnen, insb. U-Bahnen allgemein gebräuchlich. Bei Vollbahnen erfolgt die Steuerung der Bremskraft mittels Druckabsenkung in einer sogenannten Hauptluftleitung. Auch bei einer solchen Bremse ist das Befüllen dieser Leitung während eines Bremsvorganges, insbesondere eines Notbremsvorganges zu verhindern. Das hier dargestellte Verfahren ist ebenfalls auf Vollbahnen, bzw. die bei Vollbahnen gebräuchlichen Bremseinrichtungen anwendbar, da die Funktion der Hauptluftleitung bei Vollbahnen äquivalent zu der Funktion der Notbremsleitung bei U-Bahnen ist.

### Kurzbeschreibung der Zeichnungen

Es zeigen beispielhaft:
**Fig.1** pneumatische Bremseinrichtung.
**Fig.2** pneumatische Bremseinrichtung mit Notbremsleitung.
**Fig.3** Fülleinrichtung für eine Notbremsleitung.

### Ausführung der Erfindung

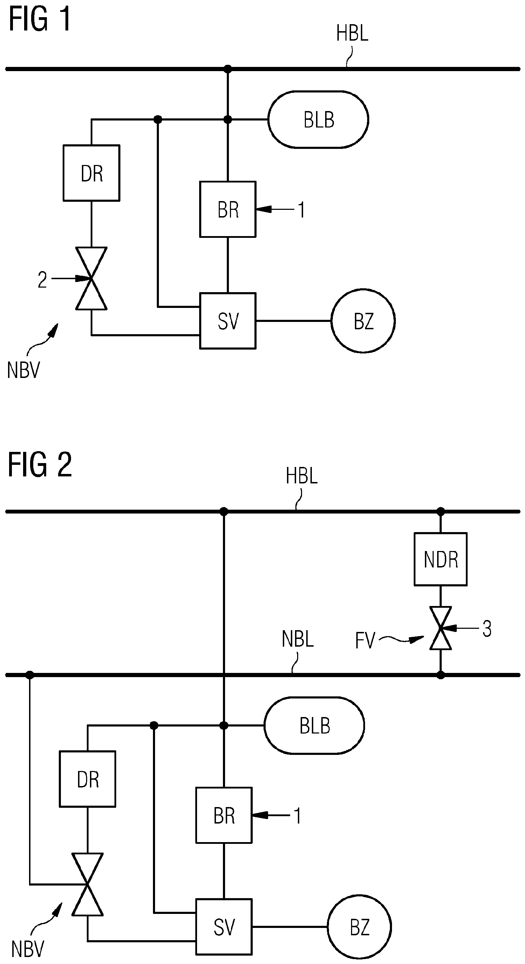

**Fig.1** zeigt beispielhaft und schematisch eine pneumatische Bremseinrichtung. Die Bremseinrichtung umfasst eine Hauptbehälterleitung HBL, welche von einem oder mehreren Kompressoren mit Druckluft gespeist wird und welche im Allgemeinen den gesamten Zugverband durchläuft. Ein Bremsluftbehälter BLB speichert die Druckluft und gewährleistet geringere Druckschwankungen bei einer Druckluftentnahme. Gebräuchlicherweise ist mindestens ein Bremsluftbehälter je Wagen vorgesehen. Die Hauptbehälterleitung HBL ist unmittelbar mit einem Steuerventil SV verbunden und leitet diesem Druckluft zu. Dieses Steuerventil SV gibt die Druckluft an einen oder mehrere Bremszylinder BZ weiter, wobei der dem Bremszylinder BZ zugeleitete Bremsdruck von dem Steuerventil SV gesteuert ist. Dazu weist das Steuerventil SV zwei Steuereingänge auf. Ein erster Steuereingang des Steuerventils SV wird von einem Steuerdruck beaufschlagt, welcher von einem Bremsdruckregler BR aus dem Druck der Hauptbehälterleitung HBL abgeleitet wird. Dazu wird der Bremsdruckregler BR mittels eines Betriebsbremssignals 1 angesteuert. Dieses Betriebsbremssignal 1 geht beispielsweise vom Fahrpersonal oder von einer Fahrzeugsteuerung aus.
Ein zweiter Steuereingang des Steuerventils SV wird von einem Druck beaufschlagt, welcher aus einem Notbremsventil NBV an das Steuerventil geleitet wird. Dem Notbremsventil NBV wird ein von einem Druckregler DR geregelten pneumatischer Druck zugeführt. Dieser Druck kann von der aktuellen Beladungssituation des Fahrzeugs abhängig sein, sodass unabhängig von der aktuellen Fahrzeugmasse immer eine gleichbleibende Verzögerung erzielt wird. Das Notbremsventil NBV wird mittels eines elektrischen Notbremssignals 2 angesteuert.

**Fig.2** zeigt beispielhaft und schematisch eine pneumatische Bremseinrichtung mit einer Notbremsleitung. Es ist eine Bremseinrichtung gezeigt, wobei die pneumatische Betriebsbremse identisch zu dem in Fig.1 gezeigtem Ausführungsbeispiel aufgebaut ist. Die Notbremseinrichtung ist jedoch grundsätzlich anders aufgebaut. Die Ansteuerung des Notbremsventils NBV erfolgt in dieser Ausführungsform pneumatisch mittels des Drucks einer Notbremsleitung NBL. Diese Notbremsleitung NBL ist ebenso wie die Hauptbehälterleitung HBL durch den gesamten Zug geführt. Erfolgt eine Entlüftung dieser Notbremsleitung NBL, so steuert das Notbremsventil NBV das Steuerventil SV mit einem von dem Druckregler DR bestimmten Druck an und löst somit einen Bremsvorgang aus. In Ruhezustand der Notbremseinrichtung, wird die Notbremsleitung NBL über ein Füllventil FV mit Druckluft aus der Hauptbehälterleitung HBL gefüllt. Ein Notbremsdruckregler NDR ist vorgesehen, welcher in der Notbremsleitung NBL einen gegenüber der Hauptbehälterleitung HBL niedrigeren Druck erzeugt. Das Füllventil FV wird mittels eines Füllsignals 3 aus der Fahrzeugsteuerung (nicht dargestellt) angesteuert.
Es ist daraus ersichtlich, dass ein Füllen der Notbremsleitung NBL während einer Notbremsung (Sicherheitsbremsung) unbedingt verhindert werden muß.

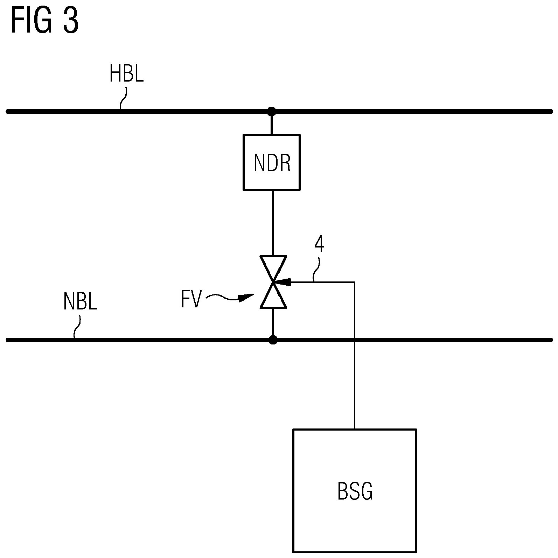

**Fig.3** zeigt beispielhaft und schematisch eine Fülleinrichtung für eine Notbremsleitung. Es ist die Fülleinrichtung für die Notbremsleitung NBL aus Fig.2 detailliert dargestellt, weitere Bauteile einer Bremsanlage sind in Fig.3 nicht dargestellt. Das Steuersignal 4 zur Ansteuerung des Füllventils FV wird von einem Bremssteuergerät BSG generiert. Da dieses Bremssteuergerät aus Hard- und Software gemäß des Sicherheits-Integritätslevels 3 aufgebaut ist ergibt sich solcherart eine deutlich höhere Sicherheit vor unbeabsichtigtem Füllen der Notbremsleitung NBL.

### Liste der Bezeichnungen

- HBL: Hauptbehälterleitung
- BLB: Bremsluftbehälter
- BR: Bremsdruckregler
- DR: Druckregler
- NBL: Notbremsleitung
- NBV: Notbremsventil
- SV: Steuerventil
- BZ: Bremszylinder
- NDR: Notbremsdruckregler
- FV: Füllventil
- BSG: Bremssteuergerät
- 1: Betriebsbremssignal
- 2: Notbremssignal
- 3: Füllsignal Fahrzeugsteuerung
- 4: Füllsignal Bremssteuergerät

## Patentansprüche

1. Fülleinrichtung für eine Schienenfahrzeugnotbremsleitung (NBL), umfassend eine Hauptbehälterleitung (HBL) und ein Füllventil (FV) wobei ein Bremssteuergerät (BSG) vorgesehen ist, welches mittels eines Füllsignals (4) das Füllventil (FV) elektrisch ansteuert, wobei bei bestimmten Betriebszuständen des Bremssteuergeräts (BSG) das Öffnen des Füllventils (FV) blockiert ist **dadurch gekennzeichnet, dass** das Bremssteuergerät (BSG) die Öffnungszeit des Füllventils (FV) je Füllvorgang auf eine bestimmte Zeitdauer begrenzt.

2. Fülleinrichtung für eine Schienenfahrzeugnotbremsleitung (NBL) nach Anspruch 1, **dadurch gekennzeichnet, dass** der bestimmte Betriebszustand des Bremssteuergeräts (BSG) das Vorliegen einer Sicherheitsbremsung ist.

3. Schienenfahrzeug, umfassend eine pneumatische Bremseinrichtung mit einer Fülleinrichtung für eine Schienenfahrzeugnotbremsleitung (NBL) nach einem der Ansprüche 1 bis 2.

## Claims

1. Filling device for a rail vehicle emergency brake line (NBL), comprising a main reservoir line (HBL) and a filling valve (FV), wherein a brake control unit (BSG) is provided which electrically actuates the filling valve (FV) by means of a filling signal (4), wherein the opening of the filling valve (FV) is blocked under specific operating states of the brake control unit (BSG), **characterised in that** the brake control unit (BSG) limits the opening time of the filling valve (FV) for each filling process to a specific period of time.

2. Filling device for a rail vehicle emergency brake line (NBL) according to claim 1, **characterised in that** the specific operating state of the brake control unit (BSG) is the presence of emergency braking.

3. Rail vehicle, comprising a pneumatic braking device with a filling device for a rail vehicle emergency brake line (NBL) according to one of claims 1 to 2.

## Revendications

1. Dispositif de remplissage pour une conduite de freinage d'urgence de véhicule ferroviaire (NBL), comprenant une conduite principale de réservoir (HBL) et une soupape de remplissage (FV), dans lequel un appareil de commande de freinage (BSG) est prévu, lequel commande électriquement la soupape de remplissage (FV) à l'aide d'un signal de remplissage (4), et dans lequel, dans des états de fonctionnement déterminés de l'appareil de commande de freinage (BSG), l'ouverture de la soupape de remplissage (FV) est bloquée,
**caractérisé en ce que** l'appareil de commande de freinage (BSG) limite la durée d'ouverture de la soupape de remplissage (FV) par processus de remplissage à une durée déterminée.

2. Dispositif de remplissage pour une conduite de freinage d'urgence de véhicule ferroviaire (NBL) selon la revendication 1, **caractérisé en ce que** l'état de fonctionnement déterminé de l'appareil de commande de freinage (BSG) est la présence d'un freinage de sécurité.

3. Véhicule ferroviaire comprenant un dispositif de frein pneumatique qui comprend un dispositif de remplissage pour une conduite de freinage d'urgence de véhicule ferroviaire (NBL) selon l'une des revendications 1 à 2.
